# EUROPEAN PATENT APPLICATION

(11) **EP 3 217 348 A1**
(43) Date of publication of application: **13.09.2017**
(21) Application number: 17159907.9
(22) Date of filing: 08.03.2017
(51) Int. Cl.: G06Q 40/00, G06Q 30/04, G06Q 20/20

(54) **TAX-FREE PROCESSING SYSTEM AND RELATED INFORMATION PROCESSING APPARATUS AND PROGRAM**

(30) Priority: 10.03.2016 JP 2016047510
(71) Applicant: Toshiba TEC Kabushiki Kaisha, Tokyo 141-0032 (JP)
(72) Inventor: SANBE, Masanori, Shinagawa-ku, Tokyo 141-8562 (JP)
(74) Representative: Takeuchi, Maya

(57) **Abstract**

An information processing apparatus according to an embodiment receives electronic receipt information corresponding to each purchase made by a customer in one or more stores in a group during a predetermined period. The electronic receipt information includes a tax-free classification code for each sales object included in the electronic receipt information. The apparatus receives passport information of the customer. The apparatus determines, based on the tax-free classification code and the passport information, tax-exempt objects purchased in the stores in the group during the predetermined period. The apparatus determines, based on the determined tax-exempt objects, an amount of a tax refund, and provides the determined tax refund to the customer. The apparatus transmits tax refund information indicating the tax refund paid relative to the objects determined to be tax exempt.

## Description

### FIELD

The present invention relates to information processing technologies, and embodiments described herein relates more particularly to a tax-free processing apparatus and system, and related information processing method, a non-transitory computer readable medium and a program product.

### BACKGROUND

A business operator may operate an export goods selling place, such as a duty free shop for selling merchandise to a non-resident. A so-called tax-free system exempts a tax such as a sales tax on the sales object. In tax-free procedures using the tax-free system, there is a need to prepare documents based on the purchase of the merchandise and the passport information presented by a non-resident. Therefore, in a commercial facility where a plurality of stores gather, for example, in a shopping district or a shopping mall, since the tax-free procedures are required for each store, the tax-free procedures become complicated. For this reason, instead of individually performing the tax-free procedures at each store, a procedure-consignment type tax-free processing method that collectively performs the tax-free procedures at tax-free counters may be adopted. For example, the tax-free counters may be provided in the vicinity of an exit or at a specific place such as a service counter in the commercial facility, for example.

However, in such a procedure-consignment type tax-free processing method, since the tax-free counters collectively perform the tax-free procedures, non-residents who request the tax-free procedures are crowded at the tax-free counters, and this results in a bottleneck.

To solve such problems, there is provided an information processing apparatus configured to:
receive electronic receipt information corresponding to each purchase made by a customer in one or more stores in a group during a predetermined period, the electronic receipt information including a tax-free classification code for each sales object included in the electronic receipt information;
receive passport information of the customer;
determine, based on the tax-free classification code and the passport information, tax-exempt objects purchased in the stores in the group during the predetermined period; determine, based on the determined tax-exempt objects, an amount of a tax refund;
provide the determined tax refund to the customer; and
transmit tax refund information indicating the tax refund paid relative to the objects determined to be tax exempt.

Preferably, the tax-exempt objects are further determined based on a price of the sales objects.

Preferably still, the predetermined period is set based on a period required by a tax authority.

Preferably yet, the electronic receipt information is received from a mobile terminal.

Suitably, the apparatus is further configured to:
display, on a display device, a code indicating a communication address of the apparatus, wherein the electronic receipt information is transmitted from the mobile terminal that scans the code.

Suitably yet, the tax refund information is transmitted to an electronic receipt management server that provides the electronic receipt information to the mobile terminal.

The above-mentioned apparatus is preferably located in a commercial facility that includes the one or more stores in the group.

The invention-also relates to a tax-free processing system comprising an electronic receipt management server, and a tax-free processing terminal including the information processing apparatus as defined above, wherein
the electronic receipt management server is configured to:
store electronic receipt information, each electronic receipt information corresponding to a purchase of one or more sales objects and is stored in correlation with: a tax-free classification code, a group ID corresponding to a group of one or more stores, and a membership ID corresponding to a customer who makes a purchase,
receive a request for electronic receipt information including a membership ID and a group ID, and
transmit, in response to the request, electronic receipt information that is stored in correspondence with the membership ID and the group ID included in the request, wherein
the tax-free processing terminal is configured to receive the said electronic receipt information from a mobile terminal that issued the request; the said customer is the customer corresponding to the membership ID in the request; and the tax-free processing terminal is configured to transmit the said tax refund information to the electronic receipt management server.

Preferably, the system further includes the mobile device, the mobile device being configured to:
determine, based on the tax-free classification code and the passport information, tax-exempt objects purchased in the stores in the group during the predetermined period,
determine, based on the determined tax-exempt objects, an amount of a tax refund,
transmit the determined tax refund to the tax-free processing terminal, and
the tax-free processing terminal provides the tax refund determined by the mobile device to the customer.

The invention further relates to a method for processing information, comprising the steps of:
receiving electronic receipt information corresponding to each purchase made by a customer in one or more stores in a group during a predetermined period, the electronic receipt information including a tax-free classification code for each sales object included in the electronic receipt information;
receiving passport information of the customer;
determining, based on the tax-free classification code and the passport information, tax-exempt objects purchased in the stores in the group during the predetermined period; determining, based on the determined tax-exempt objects, an amount of a tax refund;
providing the determined tax refund to the customer; and
transmitting tax refund information indicating the tax refund paid relative to the objects determined to be tax exempt.

Preferably, the tax-exempt objects are further determined based on a price of the sales objects.

Preferably still, the predetermined period is set based on a period required by a tax authority.

Preferably yet, the electronic receipt information is received from a mobile terminal.

The above method is preferably further configured to:
display, on a display device, a code indicating a communication address of the apparatus, wherein the electronic receipt information is transmitted from the mobile terminal that scans the code.

In the above method, the tax refund information is preferably transmitted to an electronic receipt management server that provides the electronic receipt information to the mobile terminal.

Suitably, the program is installed in an apparatus located in a commercial facility that includes the one or more stores in the group.

The invention also concerns a non-transitory computer readable medium containing a program causing an information processing apparatus to perform the steps of the method as defined above.

The invention further concerns a computer program product comprising program code means stored on a computer readable medium for performing the method as defined above, when the program product is run on a computer.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating an example configuration of a tax-free processing system according to an embodiment.
FIG. 2 is a block diagram illustrating an example configuration of an electronic receipt management server.
FIG. 3 is a block diagram illustrating an example configuration of a mobile terminal.
FIG. 4 is a block diagram illustrating an example configuration of a tax-free processing terminal.
FIG. 5 is a flowchart illustrating a flow of control processing of the electronic receipt management server.
FIG. 6 is a functional block diagram of the mobile terminal.
FIGS. 7 and 8 are flowcharts illustrating a flow of control processing of the mobile terminal.
FIG. 9 is a flowchart illustrating a flow of control processing of the tax-free processing terminal.
FIGS. 10A to 10D are diagrams illustrating display examples of the mobile terminal.

### DETAILED DESCRIPTION

According to an exemplary embodiment, there is provided an information processing apparatus and a tax-free processing system capable of reducing the complexity of the procedure-consignment type tax-free procedure at a tax-free counter.

An information processing apparatus according to an embodiment receives electronic receipt information corresponding to each purchase made by a customer in one or more stores in a group during a predetermined period. The electronic receipt information includes a tax-free classification code for each sales object included in the electronic receipt information. The apparatus receives passport information of the customer. The apparatus determines, based on the tax-free classification code and the passport information, tax-exempt objects purchased in the stores in the group during the predetermined period. The apparatus determines, based on the determined tax-exempt objects, an amount of a tax refund, and provides the determined tax refund to the customer. The apparatus transmits tax refund information indicating the tax refund paid relative to the objects determined to be tax exempt.

Hereinafter, an embodiment will be described with reference to the drawings. In the embodiment, a mobile terminal will be described as an example of an information processing apparatus, and merchandise will be described as an example of a sales object. The embodiment described below is an example, and not limiting.

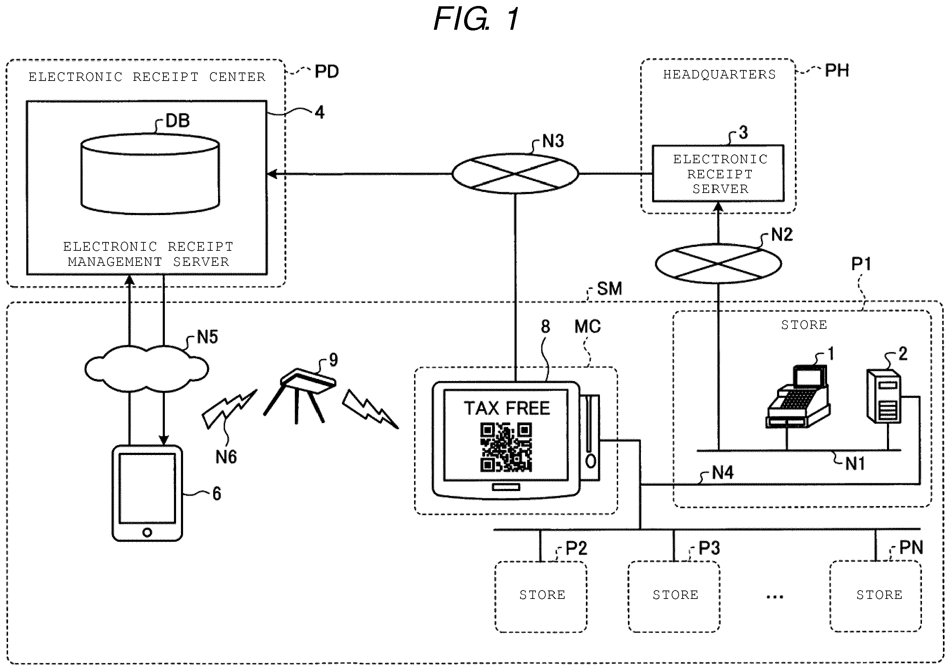

FIG. 1 is a diagram illustrating an example configuration of a tax-free processing system according to an embodiment. In a commercial facility SM such as a shopping district or a shopping mall, there are a plurality of stores (a store P1, a store P2, ... , and a store PN), each operated by an entity such as a tenant. In the embodiment, the store P1 will be used in the following description. As illustrated in FIG. 1, the tax-free processing system according to the embodiment incorporates an electronic receipt mechanism. The tax-free processing system includes a point of sales (POS) terminal 1, a store server 2, an electronic receipt server 3, an electronic receipt management server 4, a mobile terminal 6, and a tax-free processing terminal 8. The POS terminal 1 and the store server 2 are located in each store. The electronic receipt server 3 is located, for example, at a headquarters PH of each store outside the commercial facility SM. The electronic receipt management server 4 is located, for example, in the electronic receipt center of the commercial facility SM. The mobile terminal 6 is carried by a customer who visits the commercial facility SM. The tax-free processing terminal 8 is located in the tax-free counter MC in the commercial facility SM. The tax-free counter MC is located, for example, near the exit of the commercial facility SM.

The commercial facility SM has an SM code that identifies the commercial facility SM. The stores in the same commercial facility SM are identified as belonging to the same group by the SM code. The POS terminal 1 and the store server 2 are connected to each other via a network N1 such as local area network (LAN). The POS terminal 1 and the store server 2 are connected to a network N2 that connects the store P1 and the headquarters PH. Here, the network N2 is a network such as Internet or a virtual private network (VPN), for example.

The POS terminal 1 is a sales data processing apparatus that executes sales registration processing of merchandise sold in the store P1. The POS terminal 1 generates receipt information including settlement information and merchandise information, and issues a paper receipt by printing the receipt information using a printing unit 13 to be described later. The POS terminal 1 generates the electronic receipt information by electronically converting the receipt information with an unstructured form into data with a structured form different from the unstructured form. The electronic receipt information is the receipt information obtained by converting the receipt information to be originally printed on receipt paper into receipt information with a structured format such as comma-separated values (CSV) method or a JSON method. The POS terminal 1 also adds the SM code and a store code (for identifying the store where the merchandise is purchased) to the electronic receipt information.

The POS terminal 1 transmits the generated electronic receipt information to the electronic receipt server 3 via the network N2. In other words, the store issues the electronic receipt information. The transmission method of the electronic receipt information is not particularly limited, and general-purpose protocols such as HTTP or HTTPS may be used as the transmission method. The number of the POS terminals 1 located in the store P1 is not particularly limited, and a plurality of POS terminals may be located in the store P1. The electronic receipt information is transmitted to the electronic receipt management server 4 via the electronic receipt server 3, and stored in the electronic receipt management server 4. The electronic receipt information stored in the electronic receipt management server 4 can be displayed on the screen of the mobile terminal 6. The mobile terminal 6 displays the electronic receipt information to appear substantially the same as the receipt information printed on the receipt paper.

The store server 2 manages the sales of the store P1. The store server 2 manages sales information of the store P1 based on the sales information from the POS terminal 1. The store server 2 collects the sales information from each POS terminal of the store P1. The store server 2 transmits the sales information collected from the POS terminal 1 to the electronic receipt server 3 that also serves as a headquarters server.

The electronic receipt server 3 is located in the headquarters PH of the company that operates the store P1, and functions as a company management server which manages the sales information of the company that operates the store P1.

The electronic receipt server 3 receives the electronic receipt information transmitted from the POS terminal 1 via the network N2. The electronic receipt server 3 transmits the received electronic receipt information to the electronic receipt management server 4 via the network N3 that connects the headquarters PH and the electronic receipt center PD.

Here, the network N3 is a network such as Internet or a VPN, for example. The transmission method of the electronic receipt information is not particularly limited, and general-purpose protocols such as HTTP or HTTPS may be used as the transmission method.

The electronic receipt management server 4 is located in the electronic receipt center PD. The electronic receipt center PD manages the electronic receipt information of each company that is transmitted from, for example, the electronic receipt server 3. The electronic receipt center PD may be a third party organization, other than the headquarters PH, that manages the electronic receipt server 3.

The electronic receipt management server 4 functions as a customer receipt management server which collectively manages the electronic receipt information of various companies that operate the stores. The electronic receipt management server 4 stores membership data such as the name of the customer (member) registered as a member, a membership ID as a code for identifying the registered member, and/or an e-mail address of the mobile terminal 6 to which the electronic receipt information is to be received in a membership master table held in database DB, and manages the membership data stored in the database DB.

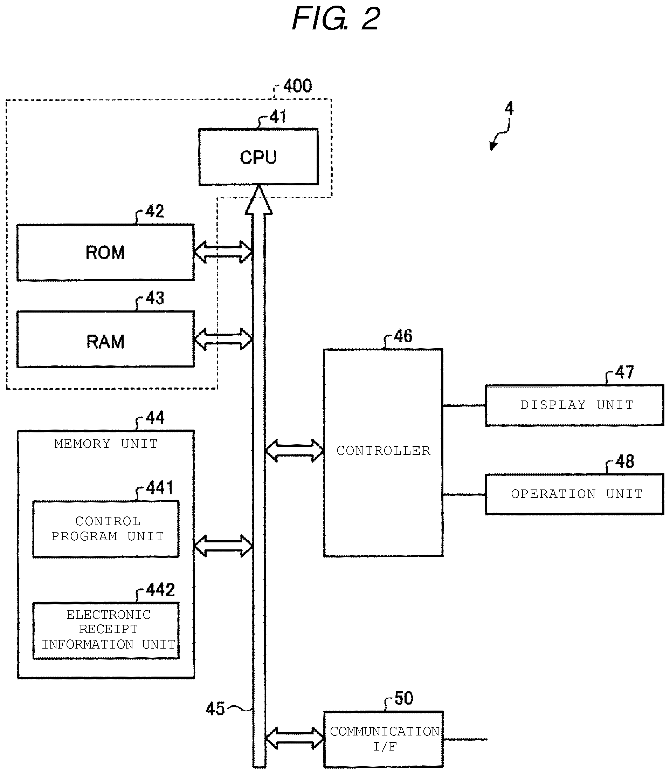

The electronic receipt management server 4 receives the electronic receipt information transmitted from the electronic receipt server 3 via the network N3, stores the electronic receipt information in an electronic receipt information unit 442 (to be described later) in the database DB, and manages the electronic receipt information (refer to FIG. 2). Specifically, the electronic receipt information includes information items such as sales registration information of merchandise, merchandise information, a purchase date, a store code of the store where the merchandise is purchased, an SM code of the commercial facility SM at which the store is opened, and a membership ID. The electronic receipt information is managed in correspondence with the membership data of the corresponding member. In addition, the electronic receipt information includes a tax-free classification code. The tax-free classification code indicates whether or not the merchandise is a tax-free article (a consumer-goods article or a general-goods article). Specifically, when the purchased merchandise is a tax-free article, the electronic receipt information corresponds to a tax-free classification code "1" indicating that the merchandise is a consumer-goods article, or a tax-free classification code "2" indicating that the merchandise is a general-goods article. When the merchandise is not a tax-free article, the electronic receipt information corresponds to a tax-free classification code "3" indicating that the merchandise is not a tax-free article. The tax-free classification code may be a code for only distinguishing whether the merchandise is a tax-free article. That is, a tax-free article corresponds to a tax-free classification code "1" indicating that the merchandise is a tax-free article, and a taxable article that corresponds to a tax-free classification code "3" indicating that the merchandise is not a tax-free article.

The electronic receipt management server 4 stores the tax-free classification code included in the electronic receipt information that corresponds to each merchandise item. The electronic receipt management server 4 stores information indicating that the merchandise included in the electronic receipt information is processed as a tax-free article for each merchandise item. When the electronic receipt management server 4 stores the electronic receipt information in the electronic receipt information unit 442, the electronic receipt management server 4 specifies a display destination (mobile terminal 6) by referring to the display destination information that corresponds with the membership ID of the electronic receipt information. The electronic receipt management server 4 notifies the display destination that there is displayable electronic receipt information via a network N5 (to be described later).

When the electronic receipt management server 4 receives a display request of an electronic receipt that designates a membership ID from the mobile terminal 6 connected via the network N5 (to be described later), the electronic receipt management server 4 allows the electronic receipt information to be displayed on the screen of the mobile terminal 6 by extracting the electronic receipt information corresponding to the membership ID from the electronic receipt information unit 442. That is, the electronic receipt management server 4 stores the extracted electronic receipt information in the web server.

The mobile terminal 6 is a mobile terminal apparatus such as a smart phone, a mobile phone, a personal digital assistant (PDA), or a tablet computer. The mobile terminal apparatus is carried and used by a user (customer) of the tax-free processing system. An application such as a web browser that displays various information provided on the network N5 is installed in the mobile terminal 6. The mobile terminal 6 receives the notification indicating that the electronic receipt information can be displayed from the electronic receipt management server 4 via the network N5. The mobile terminal 6 transmits a display request of the electronic receipt information to the electronic receipt management server 4 via the network N5 by the operation of the customer, and thus the mobile terminal 6 can display the electronic receipt information. The member can view the electronic receipt information.

The mobile terminal 6 may be installed with a tax-free processing program. When the tax-free processing program is activated, the mobile terminal 6 downloads the electronic receipt information of the store where the merchandise is purchased, from the electronic receipt management server 4. This electronic receipt information is generated by a plurality of stores in the same group with the same SM code. The mobile terminal 6 executes the tax-free processing based on each merchandise item specified as a tax-free article, for example, in the tax-free information included in the downloaded electronic receipt information.

The tax-free processing terminal 8 is connected to the store server 2 of each store via a network N4 such as a LAN. The tax-free processing terminal 8 is connected to the mobile terminal 6 in the commercial facility SM by a wireless network N6 such as wireless LAN via an access point 9 provided at a predetermined position of the commercial facility SM (for example, a plurality of positions on the ceiling of each floor).

The tax-free processing terminal 8 receives the tax-free information obtained by the tax-free processing from the mobile terminal 6, and refunds any taxed amount of the tax-free article to the customer.

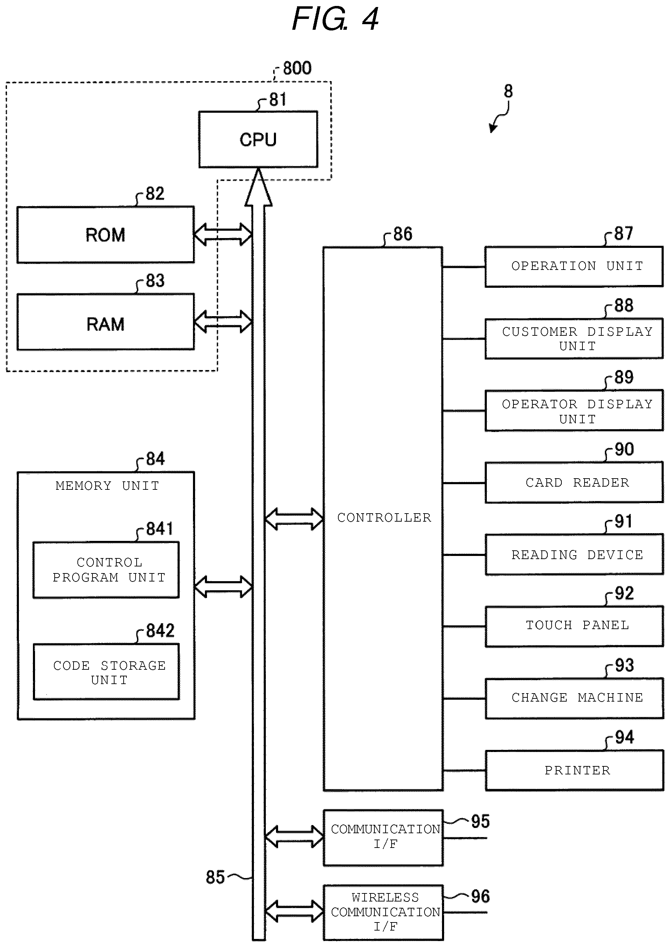

Alternatively, the tax-free processing terminal 8 may be installed with the tax-free processing program. In such a case, the tax-free processing terminal 8 executes the tax-free processing and refunds the taxed amount of the tax-free article to the customer. Further, the tax-free processing terminal 8 prints information indicating that the tax-free processing is executed by using a printer 94 (refer to FIG. 4), and issues a purchase certificate as a certificate, a purchase record slip, and a receipt. The purchase certificate is a document in which the fact of purchase of the tax-free article is written, and is a sales slip for the shop's records. The purchase record slip is a document in which the fact of purchase of the tax-free article is written, and is attached to the customer's passport. The receipt is for the customer. The tax-free processing terminal 8 also displays a two-dimensional code that includes a specific code for identifying the tax-free processing terminal 8 and address information for transmitting information to the tax-free processing terminal 8.

In the tax-free processing system with such a configuration, the mobile terminal 6 downloads the electronic receipt information that is stored in the electronic receipt management server 4 and published on the web by designating a uniform resource locator (URL). Thus the electronic receipt information can be displayed on a web browser.

Hereinafter, the hardware configuration of each apparatus will be described. FIG. 2 is a block diagram for illustrating an example hardware configuration of the electronic receipt management server 4. As illustrated in FIG. 2, the electronic receipt management server 4 includes a central processing unit (CPU) 41, a read only memory (ROM) 42, a random access memory (RAM) 43, a memory unit 44, and the like. The CPU 41 controls the operation of the electronic receipt management server 4. The ROM 42 stores various programs, the RAM 43 stores various process data, and the memory unit 44 stores various programs. The CPU 41, the ROM 42, the RAM 43, and the memory unit 44 are connected to each other via a bus 45. A control unit 400 includes the CPU 41, the ROM 42, and the RAM 43. In other words, the CPU 41 operates according to the control programs which are stored in the ROM 42 or the memory unit 44 and developed in the RAM 43, Thus the control unit 400 executes control processing to be described later.

The memory unit 44 may be a nonvolatile memory such as a hard disk drive (HDD) or a flash memory that holds stored information even when the power is turned off, and includes a control program unit 441 which stores the control programs and the electronic receipt information unit 442. The electronic receipt information unit 442 stores and manages the electronic receipt information transmitted from the POS terminal 1 for each membership ID. The electronic receipt information unit 442 stores the SM code and the store code corresponding to each electronic receipt information. The electronic receipt information unit 442 stores a tax-free classification code "1" indicating that the merchandise is a consumer-goods article, a tax-free classification code "2" indicating that the merchandise is a general-goods article, or a tax-free classification code "3" indicating that the merchandise is not a tax-free article, for each merchandise included in the electronic receipt information.

The electronic receipt management server 4 includes a display unit 47 and an operation unit 48. The control unit 400 is connected to the display unit 47 and the operation unit 48 via a bus 45 and a controller 46. The operation unit 48 may be a keyboard including numeric keys, function keys, and the like. The display unit 47 includes, for example, a liquid crystal panel, and displays information. The control unit 400 is connected to a communication I/F 50 via the bus 45. The communication I/F 50 is connected to the network N3 and the network N5.

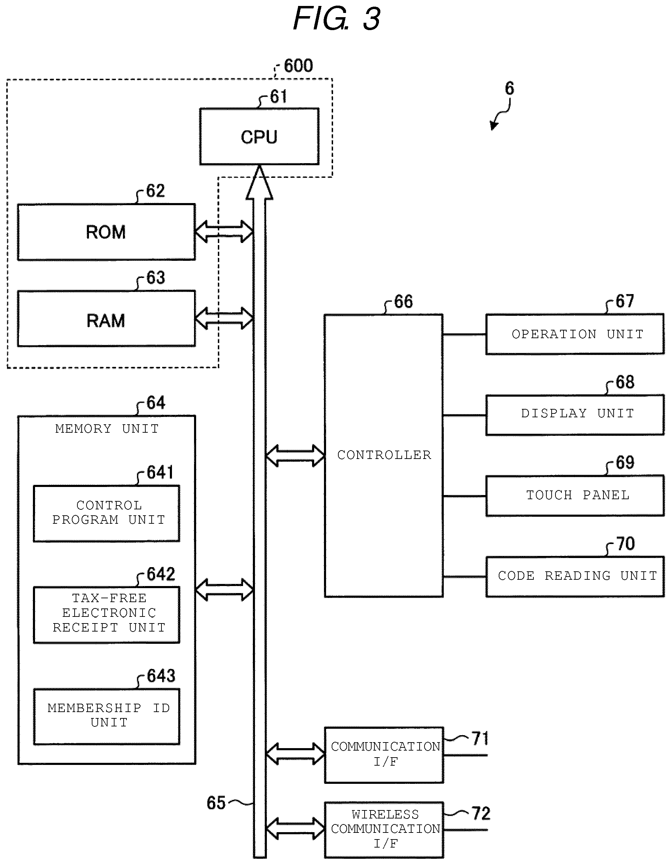

FIG. 3 is a block diagram illustrating an example hardware configuration of the mobile terminal 6. As illustrated in FIG. 3, the mobile terminal 6 includes a CPU 61, a ROM 62, a RAM 63, a memory unit 64, and the like. The CPU 61 controls the operation of the mobile terminal 6. The ROM 62 stores various programs, the RAM 63 stores various process data, and the memory unit 64 stores various programs. The CPU 61, the ROM 62, the RAM 63, and the memory unit 64 are connected to each other via a bus 65. A control unit 600 includes the CPU 61, the ROM 62, and the RAM 63. In other words, the CPU 61 operates according to the control programs which are stored in the ROM 62 or the memory unit 64 and developed in the RAM 63. Thus, the control unit 600 executes control processing (to be described later).

The control unit 600 is connected to the memory unit 64 via the bus 65. The memory unit 64 includes a control program unit 641. The control program unit 641 stores a web browser for outputting various information (contents) published on the web to a display unit 68. The control program unit 641 stores an electronic receipt correspondence program for receiving the electronic receipt information from the electronic receipt management server 4. The control program unit 641 stores a tax-free processing program for retrieving the electronic receipt information of the merchandise that is purchased at the plurality of stores in the same group and executing tax-free processing based on the retrieved electronic receipt information. The memory unit 64 includes a tax-free electronic receipt unit 642 as a storage unit. The tax-free electronic receipt unit 642 retrieves the electronic receipt information of the merchandise that is purchased at the plurality of stores in the same group from the electronic receipt management server 4, and stores the collected electronic receipt information. The memory unit 64 includes a membership ID unit 643 that stores the membership ID of the member who receives the electronic receipt information.

The control unit 600 is connected to an operation unit 67, the display unit 68, a touch panel 69, and a code reading unit 70 via the bus 65 and a controller 66. The operation unit 67 includes various operation keys and a pointing device for receiving input from the operator (customer). The display unit 68 is, for example, a liquid crystal display or the like, and displays various information such as electronic receipt information. The touch panel 69 is provided on the display unit 68. The code reading unit 70 incorporates a camera including, for example, a CMOS image sensor. The code reading unit reads an image, a moving image, a two-dimensional code, and the like by controlling the camera.

The control unit 600 is connected to a communication I/F 71 via the bus 65, and can be connected to the network N5 via the communication I/F 71. The control unit 600 is connected to a wireless communication I/F 72 via the bus 65, and can be connected to the wireless network N6 via the wireless communication I/F 72.

FIG. 4 is a block diagram illustrating an example hardware configuration of the tax-free processing terminal 8. As illustrated in FIG. 4, the tax-free processing terminal 8 includes a CPU 81, a ROM 82, a RAM 83, a memory unit 84, and the like. The CPU 81 controls the operation of the tax-free processing terminal 8. The ROM 82 stores various programs, the RAM 83 stores various process data, and the memory unit 84 stores various programs. The CPU 81, the ROM 82, the RAM 83, and the memory unit 84 are connected to each other via a bus 85. A control unit 800 includes the CPU 81, the ROM 82, and the RAM 83. In other words, the CPU 81 operates according to the control programs stored in the ROM 82 or the memory unit 84 and developed in the RAM 83, and thus the control unit 800 executes control processing to be described later.

The memory unit 84 includes a control program unit 841. The control program unit 841 stores control programs. The control unit 800 executes tax-free processing according to the control program based on the received electronic receipt information. The control unit 800 executes the refund processing of the taxed amount of the merchandise that is processed as a tax-free article according to the control program. The control unit 800 prints and issues a purchase certificate and a purchase record slip of the merchandise that is processed as a tax-free article according to the control program. The memory unit 84 includes a code storage unit 842 that stores a specific code for specifying the tax-free processing terminal 8 and an address as a destination of the information.

The control unit 800 is connected to an operation unit 87, a customer display unit 88, an operator display unit 89, a card reader 90, a reading device 91, a touch panel 92, a change machine 93, and a printer 94 via the bus 85 and a controller 86. The customer display unit 88 displays the specific code for specifying the tax-free processing terminal 8 and the address that are stored in the code storage unit 842 by a two-dimensional code. The reading device 91 optically reads the passport information printed on or stored in the passport of the customer. The passport information includes a passport number, a name, a nationality, a birth date, and the like. The printer 94 prints and issues a purchase certificate, a purchase record slip, and a receipt of the merchandise that is processed as a tax-free article.

The control unit 800 is connected to a communication I/F 95 via the bus 85, and the communication I/F 95 can be connected to the network N3. The control unit 800 is also connected to a wireless communication I/F 96 via the bus 85, and the wireless communication I/F 96 can be connected to the wireless network N6.

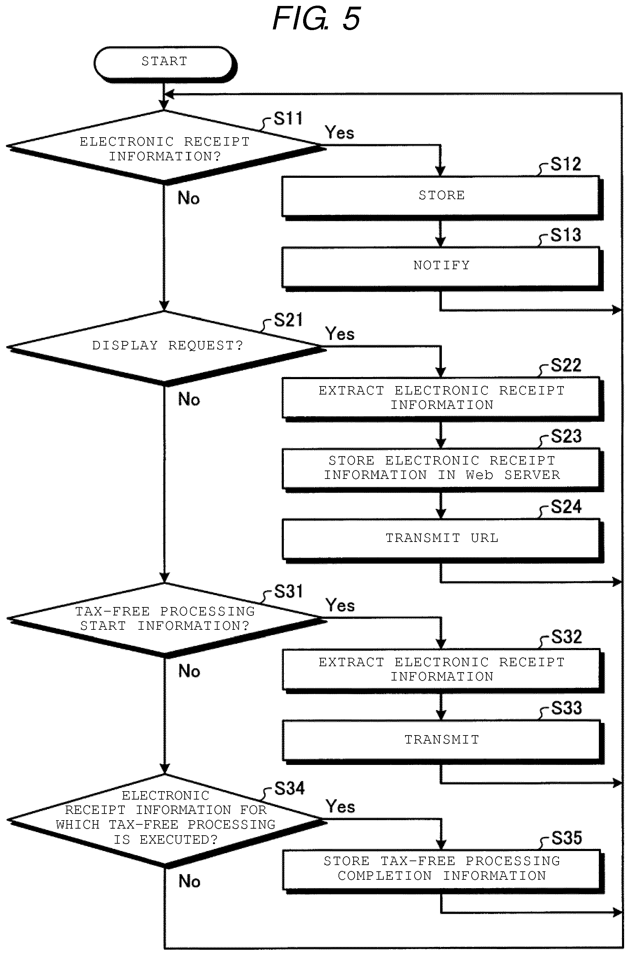

Hereinafter, the control processing executed by each unit according to the embodiment will be described. FIG. 5 is a flowchart illustrating a flow of the control processing of the electronic receipt management server 4. In FIG. 5, the control unit 400 determines whether or not the electronic receipt information is received from the electronic receipt server 3 (S11). When it is determined that the electronic receipt information is received (Yes in S11), the control unit 400 stores the received electronic receipt information in the electronic receipt information unit 442 in correspondence with the membership ID received at the same time (S12). The control unit 400 notifies that there is electronic receipt information to the mobile terminal 6 as a receipt destination of the electronic receipt information corresponding to the received membership ID (S13). The control unit 400 returns to S11.

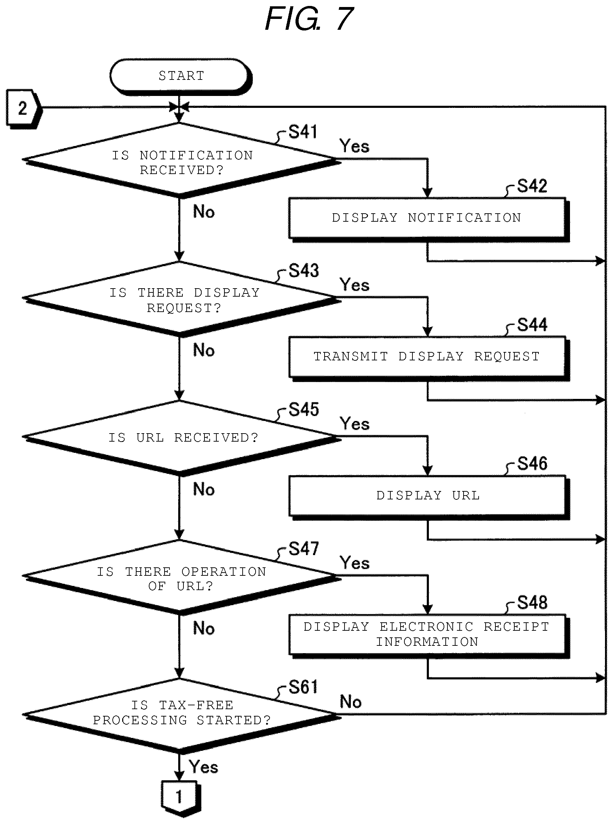

When it is determined that the electronic receipt information is not received from the electronic receipt server 3 (No in S11), the control unit 400 determines whether or not there is a display request for the electronic receipt information from the mobile terminal 6 (S21). The display request of the electronic receipt information is requested by the operation of the mobile terminal 6 (refer to FIG. 7).

When it is determined that there is a display request of the electronic receipt information (Yes in S21), the control unit 400 extracts the electronic receipt information for which the display request is requested, from the electronic receipt information unit 442 (S22). The control unit 400 stores the extracted electronic receipt information at an address indicated by the designated URL on the web server (not illustrated) (S23). The control unit 400 transmits information indicating the URL which indicates the address where the electronic receipt information is stored, to the mobile terminal 6 (S24). The control unit 400 returns to S 11. When the mobile terminal 6 designates the received URL, the mobile terminal 6 can retrieve the electronic receipt information from the location indicated by the received URL in S23 and output the electronic receipt information to the display unit 68.

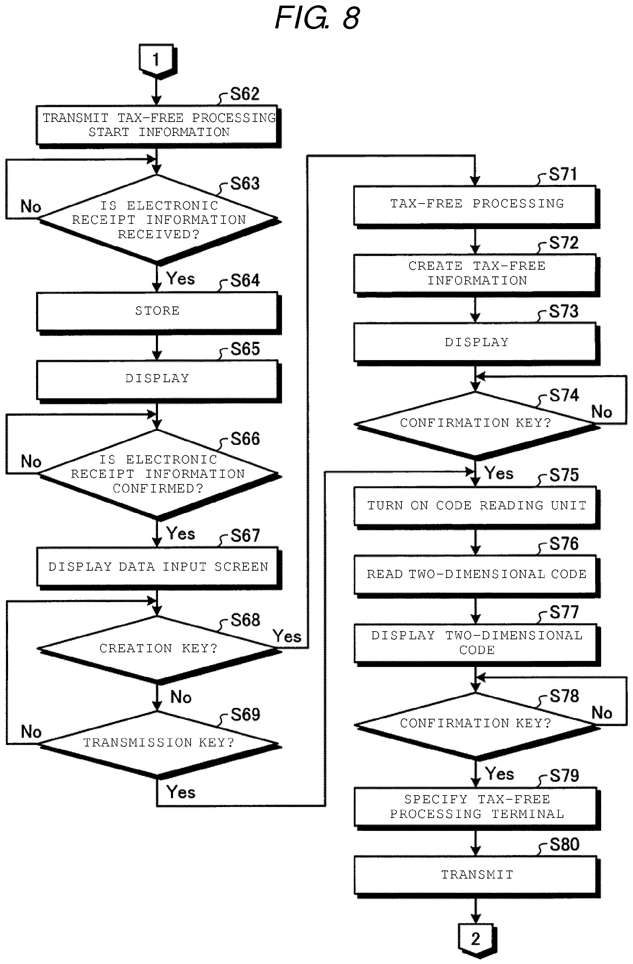

When it is determined that there is no display request for the electronic receipt information from the mobile terminal 6 (No in S21), the control unit 400 determines whether or not tax-free processing start information is received from the mobile terminal 6 (S31). The tax-free processing start information is transmitted by the mobile terminal 6 in the process of S62 in FIG. 8. When it is determined that the tax-free processing start information is received (Yes in S31), the control unit 400 extracts a plurality of pieces of electronic receipt information of the merchandise purchased on the same day (e.g., during a predetermined period required by a tax authority), from the electronic receipt information unit 442 in which the SM code is stored (S32), based on the date and the SM code for grouping the stores into the same group that are received during the predetermined period. The control unit 400 transmits the extracted electronic receipt information to the mobile terminal 6 that transmitted the tax-free processing start information (S33). The control unit 400 returns to S11.

When it is determined that the tax-free processing start information is not received (No in S31), the control unit 400 determines whether or not the electronic receipt information for which the tax-free processing is executed is received from the tax-free processing terminal 8 (S34). When it is determined that the electronic receipt information is received (Yes in S34), the control unit 400 stores tax-free processing completion information indicating that tax-free processing is executed based on the received electronic receipt information, in response to the electronic receipt information stored in the electronic receipt information unit 442 (S35). For the electronic receipt information for which tax-free processing is executed once, the control unit 400 cannot execute again tax-free processing based on the tax-free processing completion information. The control unit 400 returns to S 11.

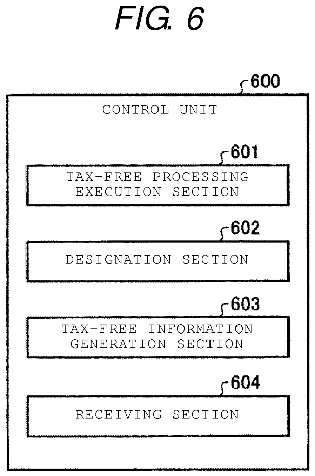

FIG. 6 is a functional block diagram illustrating the functional configuration of the mobile terminal. The control unit 600 functions as a tax-free processing execution section 601, a designation section 602, a tax-free information generation section 603, and a receiving section 604 according to the control program stored in the ROM 62 or the control program unit 641 of the memory unit 64. In one embodiment, the control unit 600 is a processor that is programmed to carry out the functions of the tax-free processing execution section 601, the designation section 602, the tax-free information generation section 603, and the receiving section 604.

The tax-free processing execution section 601 has a function of executing tax-free processing for the merchandise corresponding to the tax-free classification code indicating that the merchandise is a tax-free article, among the merchandise included in the electronic receipt information stored in the tax-free electronic receipt unit 642. The designation section 602 has a function capable of designating a plurality of pieces of electronic receipt information from the electronic receipt information stored in the tax-free electronic receipt unit 642. The tax-free information generation section 603 has a function of generating tax-free information indicating that tax-free processing is executed by the tax-free processing execution section 601. The receiving section 604 has a function of receiving the electronic receipt information corresponding to the tax-free classification code indicating that the merchandise purchased at the store is a tax-free article or not, for each store in the same group.

FIGS. 7 and 8 are flowcharts illustrating a flow of the control processing of the mobile terminal 6. As illustrated in FIG. 7, the control unit 600 determines whether or not a notification (by the process of S13) indicating availability of electronic receipt information is received is received from the electronic receipt management server 4 (S41). When it is determined that the notification is received (Yes in S41), the control unit 600 displays the notification on the display unit 73 (S42). The notification is, for example, a message such as "customer's electronic receipt is stored". The control unit 600 returns to S41. When it is determined that the electronic receipt information reception notification is not received (No in S41), the control unit 600 determines whether or not there is a display request for the electronic receipt information (S43). The operator of the mobile terminal 6 who views the notification operates the operation unit 67 to transmit the display request for the electronic receipt information. When it is determined that there is a display request for the electronic receipt information (Yes in S43), the control unit 600 transmits a display request for requesting transmission of the electronic receipt together with the membership ID stored in the membership ID unit 643, to the electronic receipt management server 4 (S44). When the display request is received, the electronic receipt management server 4 executes the processes of S22 to S24. The control unit 600 returns to S41.

On the other hand, when it is determined that there is display request for the electronic receipt information (No in S43), the control unit 600 determines whether or not a URL of the web server in which the electronic receipt information is stored is received from the electronic receipt management server 4 (S45). When it is determined that a URL is received (Yes in S45), the control unit 600 displays the received URL on the display unit 68 (S46). The control unit 600 returns to S41.

When it is determined that a URL of the web server is not received (No in S45), the control unit 600 determines whether or not there is an operation of the URL displayed on the display unit 68 (S47). The operator of the mobile terminal 6 performs an operation of designating a URL for displaying the electronic receipt. When it is determined that there is an operation of the URL (Yes in S47), the control unit 600 retreives the corresponding electronic receipt information stored in the web server and displays the electronic receipt information on the display unit 68 (S48). The control unit 600 returns to S41. The operator views the electronic receipt information displayed on the display unit 68.

When it is determined that there is no operation of the URL (No in S47), the control unit 600 determines whether or not there is a tax-free processing start operation from the operator for starting tax-free processing on the mobile terminal 6 (S61). An operator who is a non-resident inputs a tax-free processing operation for tax-free processing. When the operator activates the tax-free processing program stored in the control program unit 641, the control unit 600 determines that the tax-free processing start operation is performed. When it is determined that the tax-free processing start operation is performed (Yes in S61), as illustrated in FIG. 8, the control unit 600 transmits tax-free processing start information to the electronic receipt management server 4 (S62). At this time, the control unit 600 simultaneously transmits the SM code to the electronic receipt management server 4. The SM code is designated for grouping the plurality of stores, for example, when the operator operates the tax-free processing program. When the tax-free processing start information is received, the electronic receipt management server 4 executes the processes of S32 and S33. When it is determined that the tax-free processing start operation is not performed (No in S61), the control unit 600 returns to S41.

Next, the control unit 600 (receiving section 604) determines whether or not the electronic receipt information is received from the electronic receipt management server 4 (S63). The control unit 600 waits until the electronic receipt information is received (No in S63). When it is determined that the electronic receipt information is received (Yes in S63), the control unit 600 stores the received electronic receipt information in the tax-free electronic receipt unit 642 (S64). The control unit 600 displays the electronic receipt information stored in the tax-free electronic receipt unit 642 on the display unit 68 (S65).

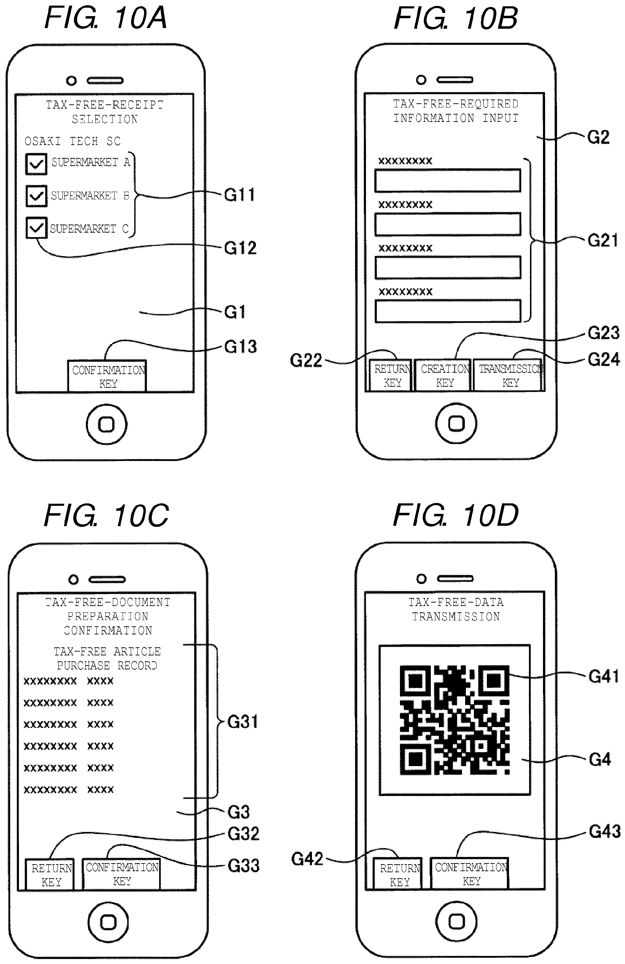

FIG. 10A illustrates a screen G1 displayed on the display unit 68 by the process of S65. In FIG. 10A, the control unit 600 displays information (for example, the store name of the store included in the electronic receipt information, the merchandise purchase date, or the like) for distinguishing the electronic receipt information stored in S64, on the screen G1. In the example in FIG. 10A, the store names included in the electronic receipt information are displayed on the screen G1 as a list G11. In the list G11, check boxes G 12 for checking the store names are displayed in front of each of the displayed store names. The operator arbitrarily designates the electronic receipt information of the store corresponding to the store name by touching the check box. In the case of FIG. 10A, the electronic receipt information of a supermarket A, a supermarket B, and a supermarket C are specified. When the electronic receipt information is designated, the control unit 600 determines whether or not any consumer-goods articles and general-goods articles included in the designated electronic receipt information satisfy tax-free conditions. That is, the control unit 600 determines whether the tax-excluded price of the merchandise is within the range of the tax-free amount available for the same non-resident on the same day (during the predetermined period). For example, the control unit 600 determines whether or not the tax-excluded price of the consumer-goods article exceeds 5,000 yen and does not exceed 500,000 yen. In addition, the control unit 600 determines whether or not the tax-excluded price of the general-goods article exceeds 10,000 yen. The tax-free conditions may vary by tax jurisdiction (such as different nations), and the tax-free processing program is programmed accordingly. When the tax-excluded price of the merchandise is not within the range, the operator further designates the electronic receipt information.

Returning to the description of FIG. 8, the control unit 600 (designation section 602) determines whether or not the designation of the electronic receipt information is confirmed by the operation of a confirmation key G13 (S66). The control unit 600 waits until the designation of the electronic receipt information is confirmed (No in S66). When it is determined that the designation of the electronic receipt information is confirmed (Yes in S66), the control unit 600 displays a data input screen for inputting various information on the display unit 68 (S67). The various information is, for example, information such as the date and time when the customer enters Japan (or the relevant tax-jurisdiction) or the status of residence. FIG. 10B illustrates a screen G2 displayed by the process of S67. In FIG. 10B, the control unit 600 displays a various-information input portion G21, a return key G22, a creation key G23, and a transmission key G24 on the screen G2. The operator inputs various information in the input portion G21. Then, the operator operates any one of the return key G22, the creation key G23, and the transmission key G24. When the tax-free conditions are not satisfied, even though the confirmation key G13 is operated, the control unit 100 does not determine that designation of the electronic receipt information is confirmed (No in S66).

The control unit 600 determines whether or not the creation key G23 is operated (S68). When it is determined that the creation key G23 is operated (Yes in S68), the control unit 600 (tax-free processing execution section 601) executes tax-free processing based on the electronic receipt information stored in S64 (S71). The tax-free processing is processing of extracting consumer-goods articles and general-goods articles as tax-free articles from the electronic receipt information stored in S64 based on the tax-free classification code, and calculating the total tax-free amount for the consumer-goods articles and the total tax-free amount for each general-goods article. The control unit 600 (that is, the tax-free information generation section 603) generates tax-free information to be printed on certificates (a purchase certificate, a purchase record slip, and a receipt) based on the tax exemption processing executed (S72). The tax-free information includes a merchandise code for specifying a tax-free article, a merchandise name, a price, and the like for each consumer-goods article and each general-goods article. The tax-free information also includes the total amount of money of consumer-goods articles and the total amount of money of general-goods articles. The tax-free information also includes the total tax-free amount of consumer-goods articles and the total tax-free amount of general-goods articles, or the total tax-free amount of consumer-goods articles and general-goods articles. The generated tax-free information does not include the customer's passport information. The transmission key G23 will be described later.

The control unit 600 displays the generated tax-free information on the display unit 68 (S73). FIG. 10C illustrates a screen G3 displayed by the process of S73. In FIG. 10C, the control unit 600 displays a tax-free information display portion G31, a return key G32, and a confirmation key G33 on the screen G3. The operator confirms the tax-free information displayed in the tax-free information display portion G31, and operates the confirmation key G33. The operator reads the SM code displayed on the customer display unit 88 of the tax-free processing terminal 8 using the code reading unit 70.

Returning to the description of FIG. 8, the control unit 600 determines whether or not the confirmation key G33 is operated (S74). The control unit 600 waits until the confirmation key G33 is operated (No in S74). When it is determined that the confirmation key G33 is operated (Yes in S74), the control unit 600 turns on the code reading unit 70 (S75). The control unit 600 reads the two-dimensional code displayed on the tax-free processing terminal 8 (S76). The control unit 600 displays the read two-dimensional code on the display unit 68 (S77). FIG. 10D illustrates a screen G4 displaying the two-dimensional code read by the process of S77. In FIG. 10D, the control unit 600 displays the two-dimensional code G41 read by the code reading unit 70, a return key G42, and a confirmation key G43 on the display unit 68. The operator confirms the screen G4, and operates the confirmation key G43.

Returning to the description of FIG. 8, the control unit 600 determines whether or not the confirmation key G43 is operated (S78). The control unit 600 waits until the confirmation key G43 is operated (No in S78). When it is determined that the confirmation key G43 is operated (Yes in S78), the control unit 600 specifies the tax-free processing terminal 8 by identifying the SM code from the read two-dimensional code (S79). The control unit 600 transmits the tax-free information created in S72 to the address of the tax-free processing terminal 8 included in the two-dimensional code (S80). The control unit 600 returns to S41.

Although not illustrated, when the return key G22 is operated in S68 or S69, the control unit 600 returns to S65. When the return key G32 is operated in S74, the control unit 600 returns to S67. When the return key G42 is operated in S78, the control unit 600 returns to S73. In S68, when it is determined that the creation key G23 is not operated (No in S68), the control unit 600 determines whether or not the transmission key G23 is operated (S69). When it is determined that the transmission key G23 is operated (Yes in S69), the control unit 600 executes the process of S75 and the subsequent processes. In this case, in the process of S80, the control unit 600 transmits the electronic receipt information stored in S64 to the tax-free processing terminal 8. When it is determined that the transmission key G23 is not operated (No in S69), the control unit 600 returns to S68.

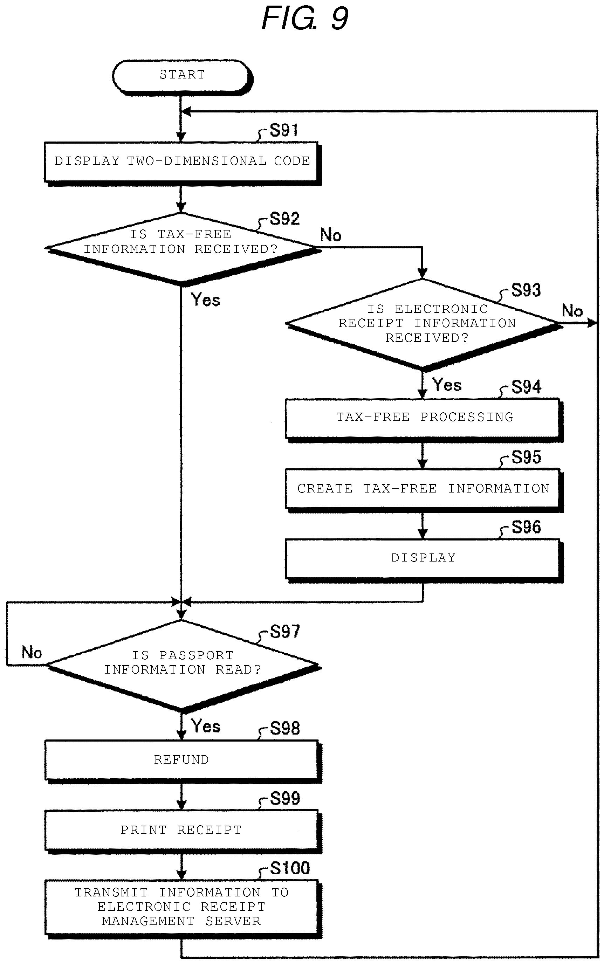

FIG. 9 is a flowchart illustrating a flow of control processing of the tax-free processing terminal 8. As illustrated in FIG. 9, the control unit 800 displays the two-dimensional code including the SM code of the tax-free processing terminal 8 itself and the corresponding address, on the customer display unit 88 (S91). Next, the control unit 800 determines whether or not the tax-free information which is transmitted by the mobile terminal 6 in S80 is received (S92). When it is determined that the tax-free information is received (Yes in S92), the control unit 800 displays an instruction for instructing the customer to place the passport on the reading device 91, on the customer display unit 88. The customer opens a predetermined page of the passport and places the page on the reading device 91. The control unit 800 determines whether or not passport information is read from the placed passport (S97). The control unit 800 waits until the passport information is read (No in S97). When it is determined that the passport information is read (Yes in S97), the control unit 800 refunds the previously taxed amount obtained by tax-free processing in S71 by controlling the change machine 93 (S98). Next, the control unit 800 (receiving section 604) prints and issues a purchase certificate as a certificate, a purchase record slip, and a receipt based on the tax-free information created in S72 and the passport information read in S97 (S99). The control unit 800 transmits information indicating that tax-free processing for the merchandise which is a tax-free article is executed, to the electronic receipt management server 4 (S100). The control unit 800 returns to S91.

When it is determined that the tax-free information is not received (No in S92), the control unit 800 determines whether or not the electronic receipt information which is transmitted by the mobile terminal 6 in S80 is received (S93). When it is determined that the electronic receipt information is received (Yes in S93), the control unit 800 stores the received electronic receipt information in the memory unit 84. The control unit 800 executes tax-free processing similar to the tax-free processing in S71 based on the stored electronic receipt information (S94). The control unit 800 generates tax-free information similar to the tax-free information in S72 (S95). The control unit 800 displays the generated tax-free information on the customer display unit 88 and the operator display unit 89 (S96). The control unit 800 executes the process of S97 and the subsequent processes. In this case, in S98, the control unit 800 refunds the previously taxed amount obtained by tax-free processing in S94. In S99, the control unit 800 prints and issues a purchase certificate as a certificate, a purchase record slip, and a receipt based on the tax-free information created in S95 and the passport information read in S97. When it is determined that the electronic receipt information is not received (No in S93), the control unit 800 returns to S91.

As described above, according to the embodiment, even in the case of the procedure-consignment type tax-free procedure, the mobile terminal 6 or the tax-free processing terminal 8 executes tax-free processing based on the electronic receipt information, and thus it is possible to reduce the complexity of the tax-free procedure at a tax-free counter.

While a certain embodiment has been described, the embodiment has been presented by way of example only, and is not intended to limit the scope of the inventions. Indeed, the novel embodiment described herein may be embodied in a variety of other forms; furthermore, various omissions, substitutions and changes in the form of the embodiment described herein may be made without departing from the framework of the inventions. The accompanying claims and their equivalents are intended to cover such forms or modifications as would fall within the scope and framework of the inventions.

For example, in the embodiment, although tax-free processing is executed by the mobile terminal 6, the configuration is not limited thereto, and tax-free processing may be executed by the electronic receipt management server 4. In this case, the electronic receipt management server 4 corresponds to the information processing apparatus.

In addition, when the tax-free processing terminal 8 executes the processes of S10 to S95, the tax-free processing terminal 8 corresponds to the information processing apparatus.

In the embodiment, although the mobile terminal 6 is an example of the information processing apparatus, the configuration is not limited thereto, and the information processing apparatus may be a terminal apparatus that cannot be carried.

In the embodiment, although one day is set as a predetermined period, the setting is not limited thereto. For example, a plurality of days such as a week or a period of staying in Japan (or the applicable tax jurisdiction) may be set as the predetermined period.

In the embodiment, although merchandise is described as an example of a sales object, the configuration is not limited to thereto, and for example, the sales object may be a service or the like.

The program that is executed by the information processing apparatus according to the embodiment is provided in an installable format file or an executable format file, by being recorded on a computer-readable recording medium such as a CD-ROM, a flexible disk (FD), a CD-R, or a digital versatile disc (DVD).

The program that is executed by the information processing apparatus according to the embodiment may be configured to be provided by being downloaded via a network such as Internet after being stored in a computer connected to the network. Further, the program that is executed by the information processing apparatus according to the embodiment may be configured to be provided or distributed via a network such as Internet.

The program that is executed by the information processing apparatus according to the embodiment may be provided by being incorporated in a ROM or the like in advance.

## Claims

1. An information processing apparatus configured to:
receive electronic receipt information corresponding to each purchase made by a customer in one or more stores in a group during a predetermined period, the electronic receipt information including a tax-free classification code for each sales object included in the electronic receipt information;
receive passport information of the customer;
determine, based on the tax-free classification code and the passport information, tax-exempt objects purchased in the stores in the group during the predetermined period; determine, based on the determined tax-exempt objects, an amount of a tax refund;
provide the determined tax refund to the customer; and
transmit tax refund information indicating the tax refund paid relative to the objects determined to be tax exempt.

2. The apparatus according to claim 1, wherein the tax-exempt objects are further determined based on a price of the sales objects.

3. The apparatus according to claim 1 or 2, wherein the predetermined period is set based on a period required by a tax authority.

4. The apparatus according to any one of claims 1 to 3, wherein the electronic receipt information is received from a mobile terminal.

5. The apparatus according to claim 4 further configured to:
display, on a display device, a code indicating a communication address of the apparatus, wherein the electronic receipt information is transmitted from the mobile terminal that scans the code.

6. The apparatus according to claim 4 or 5, wherein the tax refund information is transmitted to an electronic receipt management server that provides the electronic receipt information to the mobile terminal.

7. A tax-free processing system comprising an electronic receipt management server, and a tax-free processing terminal including the information processing apparatus according to any one of claims 1 to 6, wherein
the electronic receipt management server is configured to:
store electronic receipt information, each electronic receipt information corresponding to a purchase of one or more sales objects and is stored in correlation with: a tax-free classification code, a group ID corresponding to a group of one or more stores, and a membership ID corresponding to a customer who makes a purchase,
receive a request for electronic receipt information including a membership ID and a group ID, and
transmit, in response to the request, electronic receipt information that is stored in correspondence with the membership ID and the group ID included in the request, wherein
the tax-free processing terminal is configured to receive the said electronic receipt information from a mobile terminal that issued the request; the said customer is the customer corresponding to the membership ID in the request; and the tax-free processing terminal is configured to transmit the said tax refund information to the electronic receipt management server.

8. The system according to claim 7, wherein:
the system further includes the mobile device, the mobile device being configured to:
determine, based on the tax-free classification code and the passport information, tax-exempt objects purchased in the stores in the group during the predetermined period,
determine, based on the determined tax-exempt objects, an amount of a tax refund,
transmit the determined tax refund to the tax-free processing terminal, and
the tax-free processing terminal provides the tax refund determined by the mobile device to the customer.

9. A method for processing information, comprising the steps of:
receiving electronic receipt information corresponding to each purchase made by a customer in one or more stores in a group during a predetermined period, the electronic receipt information including a tax-free classification code for each sales object included in the electronic receipt information;
receiving passport information of the customer;
determining, based on the tax-free classification code and the passport information, tax-exempt objects purchased in the stores in the group during the predetermined period;
determining, based on the determined tax-exempt objects, an amount of a tax refund;
providing the determined tax refund to the customer; and
transmitting tax refund information indicating the tax refund paid relative to the objects determined to be tax exempt.

10. The method according to claim 9, wherein the tax-exempt objects are further determined based on a price of the sales objects.

11. The method according to claim 9 or 10, wherein the predetermined period is set based on a period required by a tax authority.

12. The method according to any one of claims 9 to 11, wherein the electronic receipt information is received from a mobile terminal.

13. The method according to any one of claims 9 to 12, wherein the program is installed in an apparatus located in a commercial facility that includes the one or more stores in the group.

14. A non-transitory computer readable medium containing a program causing an information processing apparatus to perform the steps of the method according to any one of claims 9 to 13.

15. A computer program product comprising program code means stored on a computer readable medium for performing the method according to any one of claims 9 to 13, when the program product is run on a computer.
